Europäisches Patentamt

(19) European Patent Office　(11) Publication number: **0 225 363**

Office européen des brevets　**B1**

⑫　**EUROPEAN PATENT SPECIFICATION**

(45) Date of publication of the patent specification:
15.11.89　　　　　　　　　　　　　(51) Int. Cl.⁴: **B 63 H 19/02**

(21) Application number: **86903475.1**

(22) Date of filing: **21.05.86**

(86) International application number:
**PCT/GB 86/00287**

(87) International publication number:
**WO 86/07029 (04.12.86 Gazette 86/26)**

(54) **PROPULSION OF SHIPS.**

(30) Priority: **22.05.85 GB 8512900**

(43) Date of publication of application:
**16.06.87 Bulletin 87/25**

(45) Publication of the grant of the patent:
**15.11.89 Bulletin 89/46**

(84) Designated Contracting States:
**DE FR IT**

(56) References cited:
**DE-A-802 683**
**DE-A-3 109 446**

**Patent Abstracts of Japan, vol.6, no. 240 (M-174)(1118), 27 November 1982; & JP,A, 57138494 (Mitsubishi Jukogyo K.K.) 26 August 1982**

(73) Proprietor: **COLE, David Arthur, La Couriere Mont Arthur, St. Bielades, Jersey (GB)**

(72) Inventor: **COLE, David Arthur, La Couriere Mont Arthur, St. Bielades, Jersey (GB)**

(74) Representative: **Diamond, Bryan Clive, Gee & Co. Chancery House Chancery Lane, London WC2A 1QU (GB)**

## Description

This invention relates to ships which are constructed so as to utilise power from the waves of the sea or other body of natural water on which they travel.

The ships have compartments which move slightly as the ship moves in the waves, and the movement of the compartment against the bottom or sides of the hull is used to generate hydraulic power which is harnessed to drive the ship.

According to the invention a ship which is adapted to utilise power from the waves of the body of water on which it is travelling has within its hull at least one cargo container or deck or hold which has a slightly conical base and has sides which taper inwards slightly so as to be narrower at the top and which is mounted so as to be movable by rocking to a small extent upon a strengthened base within the hull as the ship moves under the effect of the waves, and hydraulic means are mounted within the hull in positions so as to be activated by movement of said container(s), deck(s) or hold(s), the hydraulic means being connected, directly or indirectly, so as to drive the ship.

Thus each tapering hold, is configured for rocking movement, side-to-side via the fore and aft positions in a smooth circular fashion upon the suitably strengthened base, e. g. the ship's bottom girders.

The hydraulic system may conveniently comprise pistone and cylinders fitted principally between girders, e. g. those which reinforce the bottom of the hull, but some may also be on the sides of the hull and fore and aft within each compartment. The said pistons are hydraulically connected to at least one suitable pump, e. g. a gear wheel pump, which is used to generate electricity or drive the ship's propellor(s) via a gear box.

Prior methods of using wave power (i. e. described in DE-A-802 683) do not use a moving hold which rocks upon its base.

In a large cargo ship of the invention, several e. g. six, holds can be used in this way. The holds may be separated by bulk heads if necessary. The movement of the holds is sufficiently small that the resultant shift in the ship's centre of gravity is minimal and does not endanger the stability of the ship. Nevertheless, the pressure exerted by the loaded or ballasted bulk cargo hold on the hydraulic pistons is very great and can provide adequate power, except in very calm seas, to propel the ship. An auxiliary engine should be fitted for use in calms and harbours, but otherwise no fuel is needed for propulsion, which results in very great savings in costs. If no cargo is carried, the holds are filled with seawater as ballast, to provide power for propulsion.

An embodiment of the invention will be further described with reference to the accompanying drawings wherein:

| Figure 1 | is a side view of the central part of a bulk cargo ship, showing four holds in various positions; |
| Figure 2 | is a plan corresponding to Figure 1, showing the positions of the lateral pistons; |
| Figure 3 | is a cross-section of the ship through one hold at its maximum starboard leaning position (pistons not being shown); |
| Figure 4 | is a plan view of the hold alone, on a reduced scale, showing the circumferences of the upper and lower extremities, drawn to scale, also showing choice of piston arrangements depending on type and size of ship; |
| Figure 5 | is an enlarged view of the starboard side of one hold showing the hydraulic pistons; and |
| Figure 6 | shows an arrangement of hydraulic lines within the ship of Figure 1. |

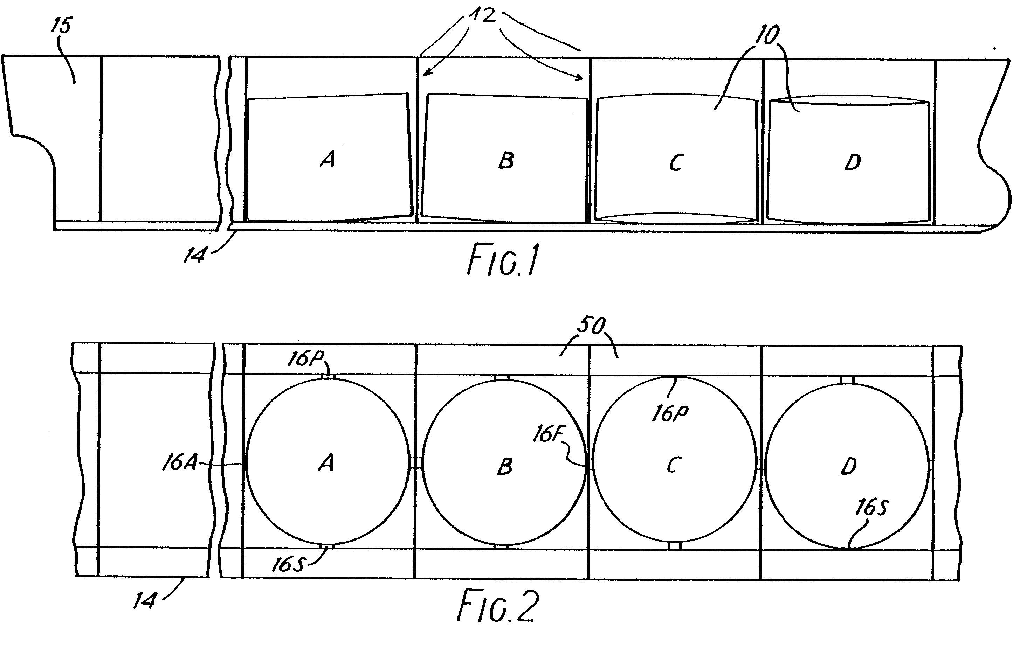

Figures 1 and 2 show the arrangement of four circular holds 10 separated by bulkheads 12 along the length of the hull 14; a power room (replacing the conventional engine room) 15 is situated in a convenient location, here shown at the rear of the ship. There could be six such holds along a 60,000 dead weight tonnes ship. In Figure 2 the position of lateral hydraulic pistons 16 are shown. The holds designated A, B, C, D are shown separately, corresponding to different movements of the ship:

A leaning aft: aft piston 16A fully depressed, side pistons 16P,S partly depressed,

B leaning forward; forward piston 16F fully depressed side pistons partly depressed,

C leaning to port (L. H.); port piston 16P fully depressed, fore and aft pistons partly depressed,

D leaning to starboard (R. H.); starboard piston 16S fully depressed, fore and aft pistons partly depressed.

There may be more than four such pistons per hold, but if so the principle of operations remains the same. The movements of the holds are only small and are shown slightly exaggerated in the drawings.

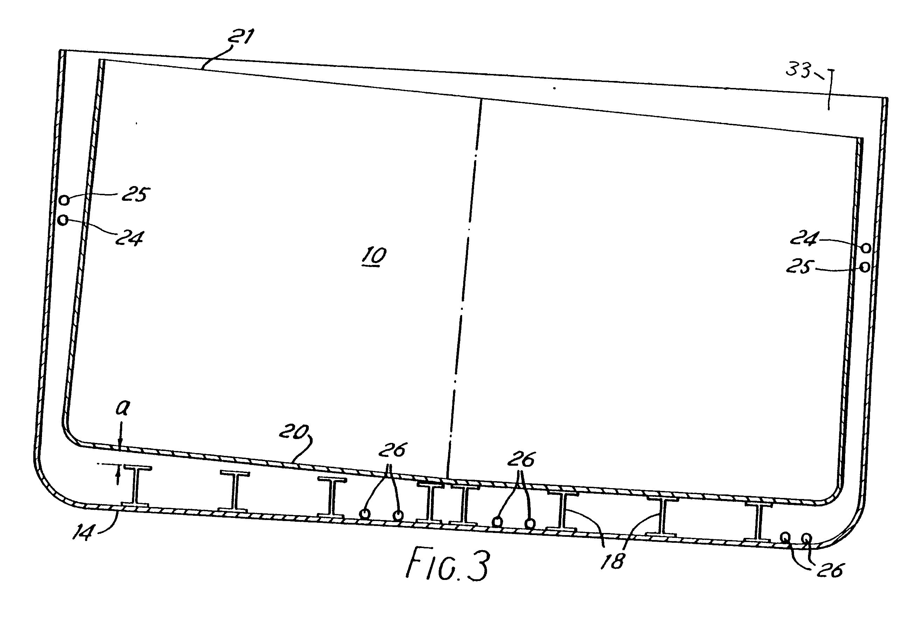

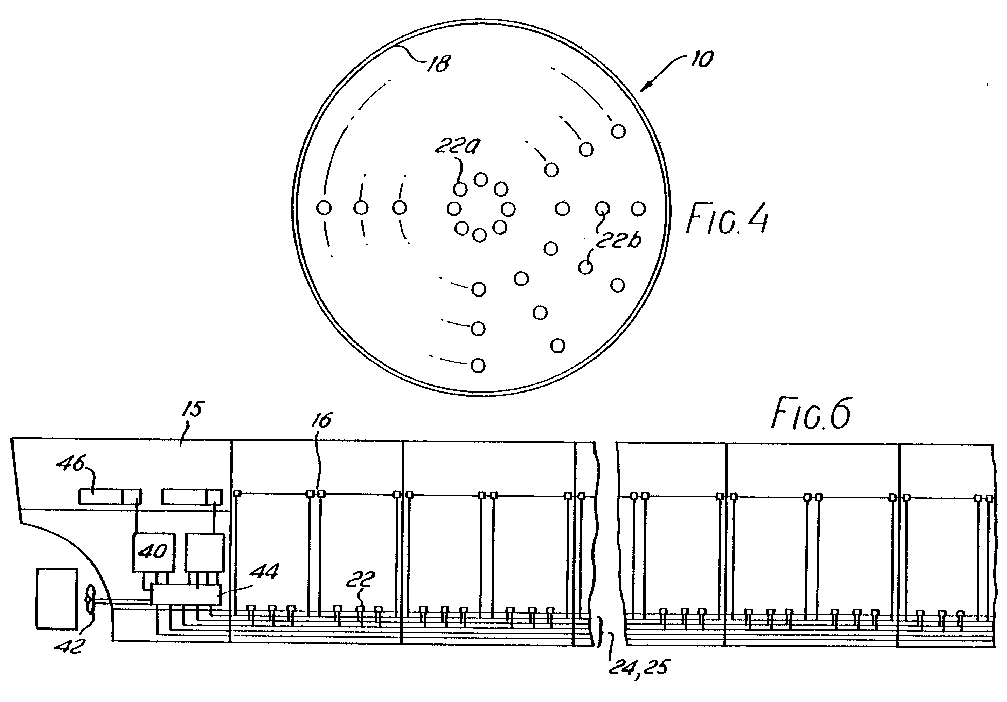

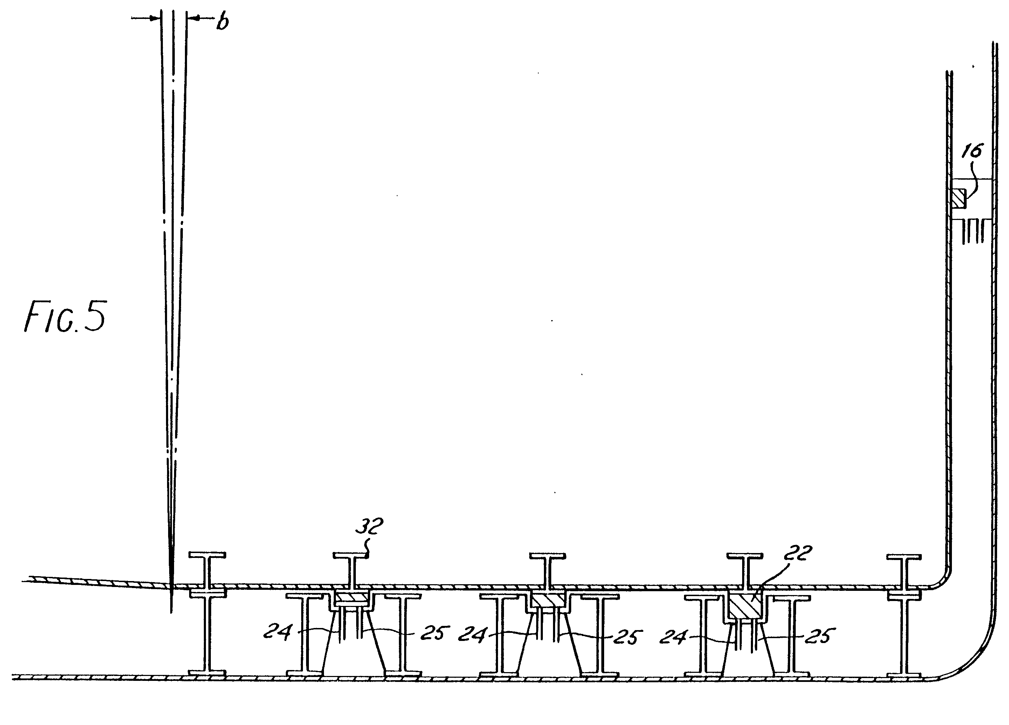

Figures 3 and 4 show in more detail one hold 10 within the hull 14, supported on pistons 22 (see Fig. 4) between girders 18 (Fig 3) at the bottom of the hull. The hold has a slightly conical base 20 and tapers slightly so as to be narrower at the top 21, e. g. it can be 19 metres high, 37 m in diameter at the top and 38 m at the bottom and will rock by a maximum of 60 centimetres up and down at the outer piston area, i. e. the distance "a" in Figure 3 is 60 cm, and the pistons 22 will travel by a maximum of 60 cm. The cargo shifts horizontally at "b" in Figure 5 by a total of 60 cm.

The bottom of each cargo hold needs to be reinforced, especially where in contact with the pistons of the hydraulic cylinders, e. g. by H-girders 32 as shown in Figure 5.

With highly robust hydraulic gear a single circle of pistons 22a (Figure 4) could be fitted between the hull girders 18 in the centre under the hold; almost all the weight is then taken by two pistons and the hold would then be balancing except that it is held by the pistons at the upper part of the hold which take a small portion of the weight, depending on the angle of roll. This arrangement is also useful for a hold with a spherical bottom. For large vessels, the weight could be evenly distributed over a number of larger circles of pistons 22b. All the pistons 16, 22 are linked to the power room 15 (Figure 6) by pipelines 24, 25 (see Figs 3 and 5) which could run to common supply and return pipes 26 under the holds. Non-return valves may be fitted in the pipelines.

Figure 6 shows in side view of the ship (as in Figure 1) a possible arrangement of hydraulic lines 24, 25 from the pistons 16, 22 directly to gear wheel pumps 40 in a power room 15 which drive the propeller 42 via the gear box 44; dynamos 46 may be driven from the pumps to provide electric power for the ship.

The top of the hull could had a conventional deck and super-structure (not shown). Hatch coamings 33 (Figure 3) could be made circular, which would give increased strength to the ship's structure. The holds 10 can be flanked by wing tanks 50 (Figure 2).

The rocking conical holds shown may be enclosed within outer holds if desirable. The holds are sealable at the top by a cover (not shown) over the hatch coaming.

When the ship is at sea, even in calm weather with a gentle swell, some rolling and pitching of the ship occurs and the holds are caused to move. The speed of the ship will depend on the weather and on the weight of the cargo or ballast. As holds rock, the various pistons are alternately depressed and caused to return to their original position, being fully extended only when the hold has moved 180° (degrees) therefrom. Thus, all pistons are at all times in contact with the conical base and the resultant movement of hydraulic fluid drives a pump, as mentioned above. A ship of 60,000 d. w. t. can be thus propelled faster than by means of conventional engines.

The following example shows the power obtainable and the stability of the vessel.

**Example**

60,000 d. w. t. bulk carrier. 10,000 tonnes in each of 6 holds. Piston travel is a mean distance of 35 cm (it is mean, because the inner pistons are shorter than the outer pistons).

10, 000 tonnes moves 0.35 m in 5 seconds
$$\frac{10,000 \times .35}{5} = \frac{3,500}{5} = 700 \text{ tonnes metres per sec.}$$
1 metric h. p. = 75 kilos/m/sec

$$\frac{700,000}{75} = 9,333 \text{ h. p. from one hold.}$$
Minus 10 % frictional loss = 8,400 h. p.
8,400 x 6 holds = 50,400 h. p.

Note: Conventional engines for that size of ship are of 18,000 h. p.

Stability:
The maximum raising of a piston is 60 centimetres when the hold shifts from, say, port to starboard. This causes a horizontal shift of cargo and upper part of hold 30 cm from the ship's centre line. The upper 30 % portion weighs 10,000 x 30 % = 3,000 tonnes. (Piston lengths and subsequently angle of cone could be very slightly adjusted to allow for weight of steel used in the fabrication of the upper part of hold.)

$$GG_1 = \frac{w \times d}{W} = \frac{3,000 \times 3 \text{ m}}{60,000} = \frac{900}{60,000} = 0.015$$
Assume GM = 2 m

$$0 = \frac{GM}{GG_1} = \frac{2}{0.015} = 133 = 0.4° \text{ approximately}$$

0.4° x 6 holds = 2.4° list caused by moving holds.

**Claims**

1. A ship, which is adapted to utilise power from the waves of the body of water on which it is travelling, has within its hull (14) at least one cargo container (A, B, C, D) or deck or hold which has a slightly conical base and has sides which taper inwards slightly so as to be narrower at the top and which is mounted so as to be movable by rocking to a small extent upon a strengthened base within the hull as the ship moves under the effect of the waves, and hydraulic means (16, 22) are mounted within the hull in positions so as to be activated by movement of said container(s), deck(s) or hold(s), the hydraulic means being connected, directly or indirectly, so as to drive the ship.

2. A ship as claimed in claim 1, wherein the hydraulic means comprises a plurality of hydraulic cylinders mounted beneath each hold, deck or container.

3. A ship as claimed in claim 2, wherein the cylinders are mounted between girders (32) which reinforce the bottom of the ship's hull.

4. A ship as claimed in claim 1, 2 or 3, wherein the hydraulic means comprises a plurality of hydraulic cylinders mounted around each hold, deck or container.

5. A ship as claimed in any preceding claim, wherein the hydraulic means are connected to one or more gear wheel pump (40) which drives the ship.

## Patentansprüche

1. Schiff mit der Fähigkeit zur Ausnutzung der Kraft der Wellen des Wasser, in dem es schwimmt, welches in seinem Rumpf (14) mindestens einen Frachtbehälter (A, B, C, D), eine Tragfläche oder Halterung mit einer leicht konischen Basis (20) aufweist, dessen Seiten leicht nach innen geneigt sind und dadurch oben näher aneinander stehen, und der derart angeordnet ist, daß er bei der Bewegung des Schiffes unter der Wirkung der Wellen gegenüber einer verstärkten Basis des Schiffsrumpfes (14) keine geringfügige Schaukelbewegung ausführt, und mit Hydraulikelementen (16, 22), die derart in dem Schiffsrumpf (14) angeordnet sind, daß sie durch die Bewegung des Frachtbehälters, der Tragfläche oder Halterung beaufschlagt und, direkt oder indirekt, zum Antrieb des Schiffes miteinander verbunden sind.

2. Schiff nach Anspruch 1, dadurch gekennzeichnet, daß die Hydraulikelemente (16, 22) aus einer Mehrzahl von Hydraulikzylindern bestehen, die unter dem Frachtbehälter, der Tragfläche oder Halterung angeordnet sind.

3. Schiff nach Anspruch 2, dadurch gekennzeichnet, daß die Hydraulikzylinder zwischen den Boden des Schiffsrumpfes (14) verstärkenden Trägern (32) angeordnet sind.

4. Schiff nach einem der Ansprüche 1 bis 3, dadurch gekennzeichnet, daß die Hydraulikelemente (16, 22) aus einer Mehrzahl von Hydraulikzylindern bestehen, die um den Frachtbehälter, die Tragfläche oder Halterung angeordnet sind.

5. Schiff nach einem der Ansprüche 1 bis 4, dadurch gekennzeichnet, daß die Hydraulikelemente (16, 22) an eine oder mehrere zum Antrieb des Schiffes dienende Zahnradpumpe oder Schraubenradpumpe (40) angeschlossen sind.

## Revendications

1. Bateau, adapté pour utiliser l'énergie des vagues de la masse d'eau sur laquelle il se déplace, caractérisé en ce qu'il possède à l'intérieur de sa coque (14) au moins un conteneur (A, B, C, D), ou un pont ou une soute qui a une base légèrement conique et dont les côtés sont inclinés légèrement vers l'intérieur de façon que le haut en soit plus étroit, et qui est monté de façon à pouvoir se déplacer en basculant légèrement sur une base renforcée à l'intérieur de la coque lorsque le bateau se déplace sous l'effet des vagues, et en ce que des moyens hydrauliques (16, 22) sont montés à l'intérieur de la coque dans des positions telles qu'ils sont actionnés par le mouvement de ce(s) conteneur(s), pont(s) ou soute(s), les moyens hydrauliques étant raccordés, directement ou indirectement, de façon à entraîner le bateau.

2. Bateau selon la revendication 1, dans lequel les moyens hydrauliques comprennent une multiplicité de vérins hydrauliques montés en dessous de chaque soute, pont ou conteneur.

3. Bateau selon la revendication 2, dans lequel les vérins sont montés entre des poutres (32) qui renforcent le fond de la coque du bateau.

4. Bateau selon l'une des revendications 1, 2 ou 3, dans lequel les moyens hydrauliques comportent une multiplicité de vérins hydrauliques montés autour de chaque soute, pont ou conteneur.

5. Bateau selon l'une quelconque des revendications précédentes, dans lequel des moyens hydrauliques sont reliés à une ou plusieurs pompe(s) à engrenages (40), qui entraîne(nt) le bateau.

FIG.1

FIG.2

EP 0 225 363 B1

*FIG. 3*

FIG.4

FIG.6

FIG. 5